# EUROPEAN PATENT APPLICATION

(11) **EP 0 696 532 A1**
(43) Date of publication of application: **14.02.1996**
(21) Application number: 95112381.9
(22) Date of filing: 07.08.1995
(51) Int. Cl.: B60S 1/34

(54) **An articulated, variable-geometry windscreen wiper**

(30) Priority: 10.08.1994 IT TO940658
(71) Applicant: Cooper Industries Inc., Houston Texas 77002 (US)
(72) Inventor: Gritella, Carlo, I-10096 Collegno, Torino (IT)
(74) Representative: Marchitelli, Mauro

(57) **Abstract**

An articulated jointed, variable-geometry windscreen wiper which includes:
- an operating arm (4) fixed to an oscillatable shaft (6),
- a wiper arm (8) pivoted on the operating arm (4) about an axis parallel to the axis of rotation of the oscillatable shaft, and
- a transmission mechanism operable to control rotation of the wiper arm (8) relative to the operating arm (4) in the opposite sense to that of the rotation of the operating arm (4).

## Description

The present invention relates to an articulated, variable-geometry windscreen wiper.

Prior art windscreen wipers, with a wiper arm fitted to an oscillatable shaft, are suitable for cleaning relatively low and wide surfaces, usually in combination with a second arm alongside the first. Devices with a simple reciprocable arm have proved inadequate for cleaning tall, narrow surfaces, making it necessary to use a pantograph-controlled device or a wiper capable of translational movement.

The object of the present invention is to provide a windscreen wiper able to clean a surface better adapted than previously known devices by shape and dimensions to cleaning windows having areas the cleaning of which requires variable geometry (forming for example a dome or an irregular arc).

According to the present invention this object is achieved by providing a windscreen wiper which includes:
- an operating arm fixed to an oscillatable shaft,
- a wiper arm articulated to the operating arm and turnable about an axis parallel to the axis of rotation of the said oscillatable shaft, and
- a drive transmission mechanism operable to rotate the wiper arm relative to the operating arm in the opposite sense to that of the rotation of the operating arm.

Further characteristics and advantages of the present invention will become apparent from the detailed description which follows, provided purely by way of non-limitative example with reference to the appended drawings, in which:
Figure 1 is a schematic front view showing a possible area cleaned by a windscreen wiper according to the present invention;
Figure 2 is a partial perspective view of the device of the invention;
Figure 3 is an exploded perspective view of the device of Figure 2; and
Figure 4 is a section taken on the line IV-IV of Figure 2.

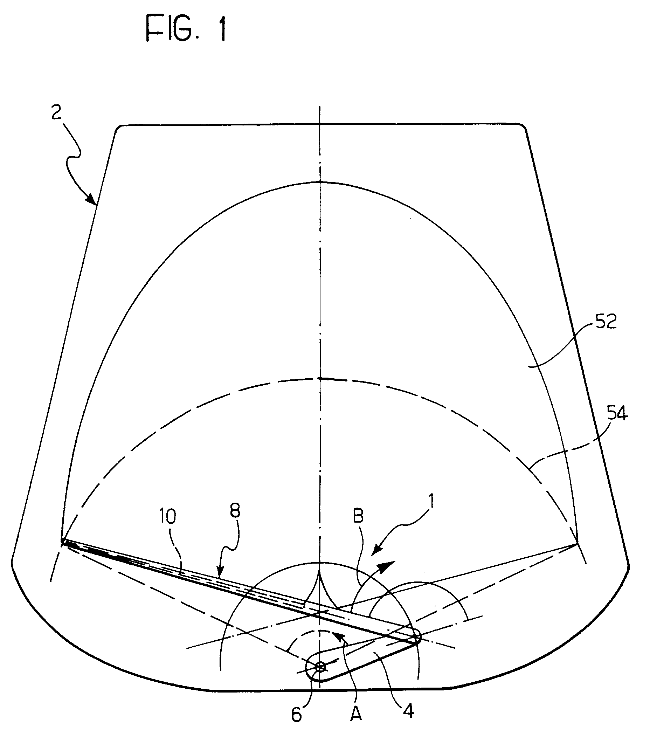

In Figure 1, which relates to one possible surface which can be cleaned by the invention, a windscreen wiper 1 is particularly suited, for example, to clean a window 2 which is narrow and high. In the embodiment illustrated, the device 1 includes an operating arm 4 fixed to an oscillatable shaft 6 positioned on the centre line of the window 2. A wiper arm 8 with a wiper element 10 is pivoted on the operating arm 4.

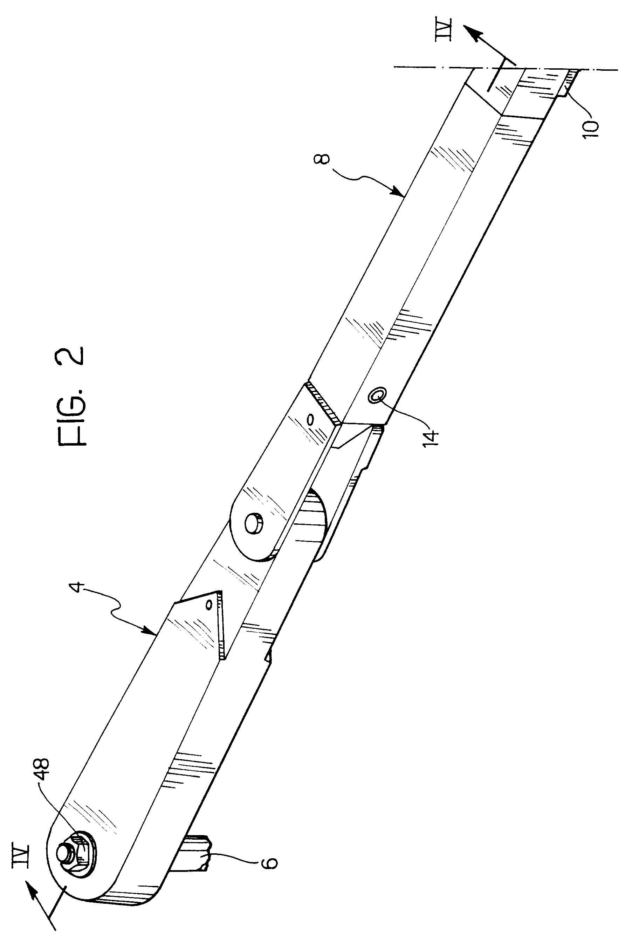

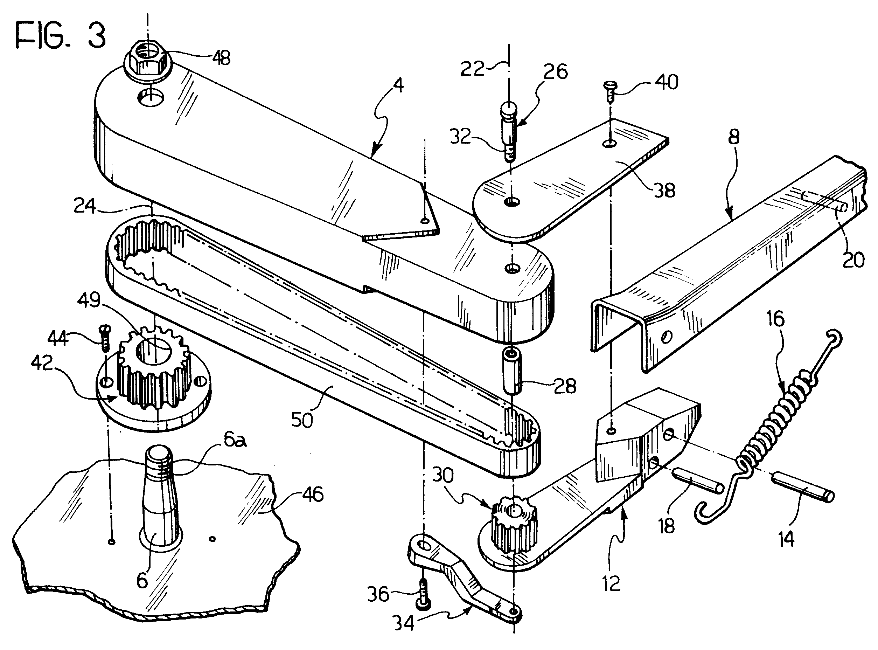

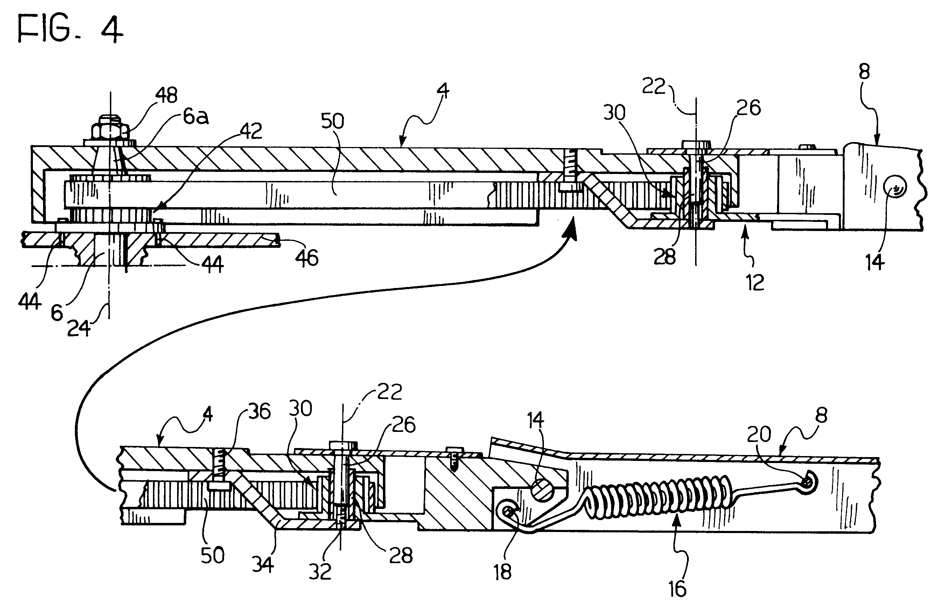

With reference to Figures 2, 3 and 4, the wiper arm 8 is fitted to the operating arm 4 by an attachment portion 12. The arm 8 is pivoted on the attachment portion 12 by a transverse pin 14 so that it is movable between a raised position and a lowered, normal working position. A tensioned coil spring 16 is arranged between the attachment portion 12 and the wiper arm 8 with its ends connected to transverse pins 18, 20 carried by the attachment portion 12 and the arm 8 respectively.

The attachment portion 12 is rotatable relative to the operating arm 4 about an axis 22 parallel to the axis of rotation 24 of the shaft 6. The rotatable connection between the attachment portion 12 and the operating arm 4 is provided by a pin 26 on which is rotatable a bush 28 which extends into a gear 30 fixed to the attachment portion 12. The pin 26 has a threaded end 32 engaged in a threaded hole in a bracket 34 fixed by means of a screw 36 to the operating arm 4. The connection between the attachment portion 12 and the operating arm 4 is completed by an upper plate 38 fixed by a screw 40 to the attachment portion 12 and pivoted on the pin 26.

A gear 42 is arranged coaxially on the shaft 6 on which the operating arm 4 is fitted. The gear 42 is fixed, for example by screws 44, to a support 46 which is fixed relative to the vehicle. The shaft 6 extends with clearance through an aperture 49 in the gear 42 and has a projecting portion 6a onto which the operating arm 4 is fixed by means of a nut 48.

The gears 42 and 30, which are coaxial of the axes 24 and 22 respectively, are interconnected by a toothed belt 50. The gear 42 may, for example, have a greater number of teeth than the gear 30, with a ratio of about 2, for example, between the number of teeth on the gears 42 and 30. This is naturally only an example, since this choice depends on the shape of the desired swept area.

The mechanism described, with a gear 42 fixed to the vehicle and a gear 30 fixed to the attachment portion 12, means that a rotation in the direction of the arrow A of Figure 1 leads to a corresponding rotation in the sense B of the wiper arm 8 relative to the operating arm 4. In the example illustrated here, the amplitude of rotational movement of the wiper arm 8 relative to the operating arm 4 can be substantially equivalent to twice the angular travel of the operating arm 4 in the same time. As a result, the wiper element 10 is given a combined rotational movement about the axes 22 and 24 and following a rotation of the operating arm 4 from one to the other of its end-of-travel positions, angularly spaced by just under 180°, the wiper element cleans the surface indicated 52 in Figure 1. Other arrangements are of course possible.

Figure 1 shows in a broken line an area 54 which would be cleaned by a wiper having a simple oscillatable arm and a wiper element of the same length.

It can be seen by comparing the two swept surfaces that the wiper of the invention enables a greater surface to be cleaned and, above all, is able to clean a surface reaching nearer to the sides of a narrow and tall glass surface.

Structural details may naturally vary widely without departing from the scope of the invention as claimed in the Claims which follow.

## Claims

1. An articulated, variable-geometry windscreen wiper, which includes:
- an operating arm (4) fixed to an oscillatable shaft (6),
- a wiper arm (8) pivoted on the operating arm (4) about an axis (22) parallel to the axis of rotation (24) of the said oscillatable shaft (6), and
- a transmission mechanism (30, 42, 50) operable to control rotation of the wiper arm (8) relative to the operating arm (4) in the opposite sense to that of the rotation of the operating arm (4).

2. A device according to Claim 1, characterised in that the amplitude of the angular movement of the wiper arm (8) relative to the operating arm (4) can be determined so that it is greater, equal to or less than the amplitude of the angular movement travelled at the same time by the operating arm (4).

3. A device according to Claim 1 or Claim 2, characterised in that the operating mechanism includes a toothed belt (50) which cooperates with two gears (42, 30), the first of which (42) is fixed relative to the vehicle and the second of which (30) is fixed to the wiper arm (8) for rotation about the said articulation axis (22) between the wiper arm (8) and the operating arm (4).

4. A device according to Claim 3, characterised in that the first gear (42) is coaxial of the axis of rotation (24) of the operating arm (4) and the second gear (30) is coaxial of the articulation axis (22) between the wiper arm (8) and the operating arm (4).

5. A device according to Claim 3, characterised in that the wiper arm (8) is fitted to the operating arm (4) by means of an attachment portion (12) fixed to the said second gear (30), the wiper arm (8) being pivoted on the attachment portion (12) about a transverse axis (14), with resilient biasing means (16) interposed between the wiper arm (8) and the attachment portion (12).
